(19)

**Europäisches Patentamt**
**European Patent Office**
**Office européen des brevets**

(11)  **EP 4 286 334 A1**

(12)  **EUROPEAN PATENT APPLICATION**

(43) Date of publication:
**06.12.2023 Bulletin 2023/49**

(21) Application number: **22176237.0**

(22) Date of filing: **30.05.2022**

(51) International Patent Classification (IPC):
**C01B 37/00** (2006.01)    **C01B 39/00** (2006.01)
**B01D 53/02** (2006.01)    **B01J 20/22** (2006.01)

(52) Cooperative Patent Classification (CPC):
**C01B 37/00; B01D 53/02; B01J 20/226;**
**B01J 20/3204; B01J 20/3236; C01B 39/00**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Vrije Universiteit Brussel**
**1050 Brussel (BE)**

(72) Inventors:
• **SHARMA, Ravi**
**1080 Molenbeek-Saint-Jean (BE)**
• **VAN ASSCHE, Tom**
**2870 Ruisbroek (BE)**
• **DENAYER, Joeri**
**1600 Sint-Laureins-Berchem (BE)**

(74) Representative: **AWA Benelux**
**AWA Benelux SA**
**Tour & Taxis - Royal Depot box:216**
**Havenlaan 86c Avenue du Port**
**1000 Bruxelles (BE)**

(54)  **METHOD FOR PRODUCING ZEOLITIC IMIDAZOLATE FRAMEWORK (ZIF) CRYSTALS AND COATINGS**

(57)  The present invention relates to a method for producing zeolitic imidazolate framework (ZIF) crystals, wherein the method comprises the steps of providing a substrate comprising a first metal, mixing a source of a second metal, an imidazolate and optionally a modulator in a solvent, thereby obtaining a reaction solution, and contacting the substrate with the reaction solution, thereby obtaining ZIF crystals. The second metal is Zn, Co, Fe, Cu or a mixture thereof. The contacting step is performed at a temperature between 5 °C and 50 °C, and optionally the ZIF crystals form a layer on the substrate. The invention further relates to articles comprising a substrate and ZIF crystals obtained by methods of the invention, and to the use of such articles for separation, desorption, adsorption, or catalytic applications.

**FIG. 2**

## Description

## Technical field

The present invention is related to methods for producing zeolitic imidazolate framework (ZIF) crystals, in particular as a coating on a substrate. The present invention is further related to articles comprising the ZIF crystals obtained and uses thereof.

## Background art

The interest in metal organic frameworks (MOFs), especially zeolitic imidazolate frameworks (ZIFs) such as the microporous crystalline ZIF-8, has grown considerably in the last decade because of their extensive applications in the field of adsorption, separation and catalysis.

A MOF's family of special interest because of its potential applications in solid-gas, solid-vapour and solid-liquid heterogeneous catalysis is that of zeolitic imidazolate frameworks (ZIFs) since they present high specific surface as well as good thermal and chemical stability.

Zeolitic imidazolate frameworks are composed of tetrahedrally coordinated transition metal ions, such as iron (Fe), cobalt (Co), zinc (Zn) or copper (Cu) connected by imidazolate linkers. Their metal-imidazolate-metal angle is similar to the 145° Si-O-Si angle in zeolites, ZIFs are topologically isomorphic with zeolites. Different ZIFs are known these days, such as ZIF-4, ZIF-62, ZIF-67 and ZIF-8.

In ZIF-8 $Zn^{2+}$ ions are linked to nitrogen in imidazolate anions at connection angles close to 145° in tetrahedral coordination, forming a three-dimensional porous network with a zeolitic topology (SOD type). Since ZIF-8 has an analogous structure to aluminosilicate zeolites, ZIF-8 possess properties of both MOFs and zeolites, thus exhibiting large pore volume and surface area, exceptional thermal and chemical stability and negligible cytotoxicity. ZIF-67 has $Co^{2+}$ ions linked to nitrogen in imidazolate anions in a cubic crystal symmetry. ZIF-8 and ZIF-67 are considered an attractive adsorbent for example for separation of chemicals, such as propane, propylene, n-butane and isobutene gas separation, for capture of volatile organic compounds (VOCs), for sensor applications and for adsorption-driven heat pumps.

'Microreactor with silver-loaded metal-organic framework films for gas-phase reactions', Papurello, R.L., Fernández, J.L. et al, Chemical Engineering Journal (2017) 313, pages 1468-1476 discloses methods to deposit ZIF-8 films on copper foils having microchannels. The ZIF-8 films are deposited by direct solvothermal synthesis using a reaction mixture of zinc nitrate hexahydrate ($Zn(NO_3)_2.6H_2O$), sodium acetate, 2-methylimidazole and methanol in a molar ratio of $Zn(NO_3)_2.6H_2O$/sodium acetate/2-methylimidazole/methanol 1/2/2/2000. The reaction mixture is first stirred for 30 minutes. Then, the ZIF-8 film is obtained by placing the reaction mixture in a Teflon vessel together with the copper substrate at 120 °C for a duration between 1 and 24 hours.

'Facile in situ growth of ZIF-8 films onto aluminium for applications requiring fast thermal response', Papurello, R.L., Zamaro J.M., Journal of Material Science (2021) 56, pages 9065-9078 discloses methods to deposit ZIF-8 films on an aluminium substrate. The ZIF-8 films are deposited by direct solvothermal synthesis using a reaction mixture of zinc nitrate hexahydrate ($Zn(NO_3)_2.6H_2O$), sodium acetate, 2-methylimidazole and methanol in a molar ratio of $Zn(NO_3)_2.6H_2O$/sodium acetate/2-methylimidazole/methanol 1/2/2/200. Methanolic solutions of 2-methylimidazole and zinc nitrate are prepared separately under stirring until the solids are dissolved. Both solutions are then mixed and maintained under stirring for another 20 minutes. Then, the ZIF-8 film is obtained by placing the reaction mixture in a Teflon-lined autoclave together with the aluminium substrate at 120 °C for a duration of 10 hours. A Teflon-lined autoclave is a closed reactor vessel to provide a leak-proof environment.

One of the disadvantages of the foregoing methods is that they are carried out at elevated temperatures, requiring a significant amount of energy to maintain such temperature for prolonged times. Furthermore, heating such solutions may cause hazardous situations.

WO 2016/040616 discloses a method of depositing a MOF, wherein first a metal solution is deposited onto a substrate comprising alumina ($Al_2O_3$), titanium oxide ($TiO_2$), a polymer, a copolymer, carbon, a metal or a metal oxide, followed by spinning the substrate to spread the metal solution. In a further step, an organic ligand solution is deposited onto the substrate and the substrate is spun again, to spread the organic ligand solution and to form a MOF layer.

One of the disadvantages of this method is that the method is complex, requiring several process steps. Further, the spinning, such as the rotation speed, must be controlled precisely to obtain a rather homogeneous MOF layer.

## Summary of the invention

The present invention aims to overcome one or more of the above drawbacks. It is an aim of the invention to provide a method for producing zeolitic imidazolate framework (ZIF) crystals, wherein the method is less complex, i.e. comprises less process steps, has a reduced energy consumption, has improved intrinsic safety, and can be precisely controlled. Advantageously, the methods of the present invention allow improved control on the shape and size of the ZIF crystals.

The present invention further aims to provide ZIF crystals on a substrate and a method for producing same, wherein the ZIF crystals form a layer on the substrate, particularly a uniform or continuous layer. It is an aim of the present invention to provide ZIF crystals on a substrate and a method of producing same, wherein the ZIF crystals are stable, in particular under cyclic use, such as repeated heating and cooling down and exposure to sonication.

In the context of the present disclosure, the terms "layer" and "coating" are used interchangeably.

According to a first aspect of the invention, there is therefore provided a method for producing zeolitic imidazolate framework (ZIF) crystals as set out in the appended claims. The method comprises the steps of

- providing a substrate comprising a first metal,
- mixing an imidazolate, optionally a modulator and a source of ions of a second metal in a solvent, thereby obtaining a reaction solution, and
- contacting the substrate with the reaction solution, thereby obtaining ZIF crystals.

The second metal is advantageously selected from one or more of: iron (Fe), cobalt (Co), zinc (Zn) and copper (Cu), preferably from one or more of zinc (Zn) and cobalt (Co).

Advantageously, the substrate is contacted with the reaction solution by submersing the substrate in the reaction solution.

The contacting step is performed at a temperature between 5 °C and 50 °C, for example between 10 °C and 50 °C, such as between 15 °C and 30 °C. Advantageously, the contacting step is performed at room temperature.

Advantageously, the first metal comprised in the substrate is a transition metal or a post-transition metal, particularly the first metal is an element of group 8 through 13 of the periodic table. Preferred metals are copper (Cu), zinc (Zn), aluminium (Al), cobalt (Co), nickel (Ni), iron (Fe), or combinations thereof, in particular Cu, Zn, Al, Co or a mixture thereof, more particularly Cu or Zn or a mixture thereof. The first metal can, though does not need to, be different from the second metal. The first metal is advantageously accessible, such as at an exposed surface of the substrate. The substrate can substantially consist of the first metal. The substrate can be any suitable structure, particularly a foil or sheet, or a foam.

The substrate can comprise a salt of the first metal. For example, the substrate can comprise a base structure such as a foil, a sheet or a foam and the first metal, or a salt of the first metal is provided on a(n exposed or accessible) surface of the base structure. The base structure can comprise or substantially consist of the first metal, or any other suitable material.

Advantageously, the ZIF crystals comprise or substantially consist of ZIF-8 crystals and/or ZIF-67 crystals, preferably ZIF-8 crystals. Advantageously, methods of the present invention result in the ZIF crystals forming a layer on the substrate. In other words, the ZIF crystals are advantageously present on the substrate as a coating.

Advantageously, the reaction solution exchanges with an atmosphere, i.e. a surrounding atmosphere, during the contacting step. In other words, the reaction solution advantageously shares an interface with the atmosphere. The interface advantageously allows for exchange of chemical compounds between the reaction solution and the surrounding atmosphere. For example, oxygen can diffuse into the reaction solution, and/or any gases formed in the reaction solution during contacting the substrate with the reaction solution can be removed from the reaction solution. It was surprisingly observed that when the reaction solution had an interface with a surrounding atmosphere, e.g. by utilizing a reaction vessel that is open to the atmosphere such as air, ZIF crystals formed more easily and it was possible to form a coating of ZIF crystals on a substrate. Without wishing to be bound by any theory, the inventors believe that this results from the fact that any gases removed from the reaction solution during contacting the substrate with the reaction solution can be continuously removed from the interface. This is in contrast to closed reaction environments, such as closed vessels, wherein any gases removed from the reaction solution accumulate in the part of the closed reaction environment devoid of the reaction solution. Hence, advantageously, the reaction solution exchanges with an open atmosphere or an atmosphere under a continuous flow of gas, such as air, in the atmosphere. In some examples, this is obtained by exposing the reaction solution to open air. In other examples, this can be obtained by providing a forced flow of a gas, such as air, in exchanging contact with the reaction solution, at or below atmospheric pressure, e.g. by means of a ventilation system providing continuous replenishment of the gas that is removed from the interface with the reaction solution.

Advantageously, the surrounding atmosphere comprises at least 15 vol. % oxygen, preferably at least 20 vol.% oxygen, more preferably at least 23.5 vol.% oxygen. Advantageously, the surrounding atmosphere is air.

Advantageously, the contacting step is performed at a pressure equal to or higher than atmospheric pressure, preferably at substantially atmospheric pressure.

The source of ions of the second metal is advantageously a salt of the second metal. The salt can be a nitrate salt, a chloride salt, and/or a sulphate salt. The second metal can advantageously be zinc, cobalt, iron, copper or a mixture of two or more thereof. Advantageously, the ZIF crystals obtained from these salts comprise one or a combination of ZIF-8 crystals and ZIF-67 crystals. Specific examples of suitable salts are: zinc nitrate, zinc chloride, zinc sulphate, or a mixture of two or more thereof to obtain ZIF-8 crystals, and alternatively or in addition cobalt nitrate, cobalt chloride, cobalt sulphate, or a mixture of two or more thereof to obtain ZIF-67 crystals.

Advantageously, the imidazolate is 2-methylimidazole.

Advantageously, the reaction solution further comprises a modulator. Advantageously, the modulator comprises or substantially consists of an acetate, particularly an acetate salt, such as sodium acetate, potassium acetate, or combinations thereof.

Advantageously, the solvent is methanol, ethanol or N,N-dimethylformamide.

Advantageously, when the reaction solution comprises a modulator, the molar ratio of the second metal and the modulator is between 1:0.1 and 1:8, preferably between 1:0.5 and 1:4. It can be advantageous to utilize molar ratios of the second metal and the modulator between 1:0.4 and 1:1.6, advantageously between 1:0.5 and 1:1.5 in the reaction solution, as it was surprisingly observed that such molar ratios allow obtaining ZIF crystals of rhombic rather than cubic shape. Additionally, it was surprisingly observed that at these molar ratios, larger ZIF crystals can be obtained.

According to a second aspect of the invention, there is provided an article comprising zeolitic imidazolate framework (ZIF) crystals as set out in the appended claims. Advantageously, the ZIF crystals are obtained by methods of the present invention.

Advantageously, the ZIF crystals are present as a coating on a substrate comprising the first metal. Suitable substrates are described above in relation to the first aspect.

Advantageously, the coating of ZIF crystals has a thickness between 5 $\mu$m and 500 $\mu$m, for example between 20 $\mu$m and 250 $\mu$m, preferably between 40 $\mu$m and 200 $\mu$m.

Advantageously, the ZIF crystals have a cubic or a rhombic dodecahedral shape.

Advantageously, the ZIF crystals comprise or substantially consist of ZIF-8 crystals, ZIF-67 crystals or a combination of both, preferably ZIF-8 crystals.

Advantageously, the ZIF crystals have a mean crystal size between 1 $\mu$m and 50 $\mu$m, preferably between 3 $\mu$m and 40 $\mu$m, preferably at least 10 $\mu$m, as measured by means of scanning electron microscope (SEM).

The present invention is further related to the use of the above article for separation, desorption, adsorption or catalytic applications. The present invention is further related to separation, desorption, adsorption or catalytic processes, in which the ZIF crystals obtained by methods as described herein are used in assisting such processes, e.g. as separating agent, desorption agent, adsorbents or catalysts respectively.

One of the surprising advantages of the methods of the present invention, compared to prior art, is that the formation of ZIF crystals can be tuned. In other words, it is possible to control the shape and size of the ZIF crystals.

A further advantage of the methods of the present invention is that it is possible to obtain products comprising the ZIF crystals on selected zones, for example in a patterned way.

Yet another advantage is that a wide variety of substrate materials can be used, for example substrates electroplated with a first metal, such as copper or zinc. Also the shape of the substrate can be varied largely.

## Brief description of the figures

Aspects of the invention will now be described in more detail with reference to the appended drawings, wherein same reference numerals illustrate same features and wherein:

Figures 1A and 1B represent metal salts as substrate in a reaction solution according to the invention.

Figure 2 shows a scanning electron microscope (SEM) image of ZIF-8 crystals obtained on copper salt substrate, by means of methods according to the invention.

Figure 3 shows a SEM image of ZIF-8 crystals obtained on zinc salt substrate, by means of methods according to the invention.

Figure 4 shows a SEM image of ZIF-8 crystals obtained on aluminium salt substrate, by means of methods according to the invention.

Figure 5 shows X-ray diffraction (XRD) spectra for ZIF-8 crystals obtained by methods of the invention compared to a commercially available reference ZIF-8 crystal powder.

Figure 6 shows a SEM image of the surface of a coated copper foil obtained by methods of the invention as seen from the top.

Figure 7 shows a SEM image of a coated copper foil obtained by methods of the invention in cross-section.

Figure 8 shows a SEM image of the surface of a coated zinc foil obtained by methods of the invention as seen from the top.

Figure 9 shows a SEM image of a coated zinc foil obtained by methods of the invention in cross-section.

Figure 10 shows the XRD spectra for a ZIF-8 crystal coating on a copper foil obtained by methods of the invention and for a commercially available ZIF-8 powder as reference sample.

Figure 11 shows the vapour-phase adsorption isotherm of n-butanol for a ZIF-8 crystal coating on a copper foil obtained by methods of the invention.

Figures 12, 13 and 14 show a SEM image of the surface of a coated copper foil obtained by methods of the invention as seen from the top.

Figure 15 shows an electroplated stainless steel rod with a ZIF-8 crystal coating obtained by methods of the invention, and a SEM image thereof.

## Description of embodiments

According to a first aspect of the invention, there is provided a method for producing zeolitic imidazolate framework (ZIF) crystals. Advantageously, the ZIF crystals are obtained on a substrate, i.e. deposited or grown on a substrate. Advantageously, the ZIF crystals form a layer on the substrate. In other words, the ZIF crystals are advantageously present on the substrate as a coating.

Methods according to the invention comprise a first step of providing a substrate. Advantageously, the substrate comprises a first metal. The first metal can be, without being limited thereto, copper (Cu), zinc (Zn), aluminium (Al), cobalt (Co), nickel (Ni), and iron (Fe). Iron can be included in the substrate as steel, such as stainless steel. Preferred first metals include copper, zinc, aluminium and cobalt.

The first metal can be included in or on the substrate as a metal salt. Examples of metal salts are zinc salt, copper salt, aluminium salt, cobalt salt, nickel salt and iron salt. Preferred examples of metal salts are zinc nitrate hexahydrate ($Zn(NO_3)_2.6H_2O$), copper nitrate trihydrate ($Cu(NO_3)_2.3H_2O$), aluminium nitrate nonahydrate ($Al(NO_3)_3.9H_2O$), and cobalt nitrate hexahydrate ($Co(NO_3)_2.6H_2O$).

The substrate can be of practically any shape. Examples are sheets, foils, wires, rods, open cell structures such as foams, and powders.

According to a first embodiment, the substrate is made of the first metal, i.e. substantially consists of the first metal. With "substrate being made of the first metal" and "substrate substantially consisting of the first metal" it is meant in the light of the present invention that very small amounts of impurities can be present, such that the substrate comprises at least 95% by weight of the first metal, preferably at least 98% by weight, more preferably at least 99% by weight, based on the total weight of the substrate. In other words, the substrate can be, without being limited thereto, a copper foil, a sheet of aluminium, an iron wire, etc.

According to a second embodiment, the substrate comprises a base structure covered, at least partially, by a compound, such as a salt, comprising the first metal. The first metal hence is present at least at an exposed surface of the substrate. The material(s) forming the base structure are not limited, i.e. the base structure can comprise or substantially consist of, without being limited thereto, one or more of a metal, such as stainless steel, an organic material, such as a polymer, a ceramic material, or a composite. For example, the substrate can be a stainless steel sheet covered at least partially with a copper salt, e.g. in a patterned way. The first metal can be provided, i.e. deposited, on the base structure by means of any technique known in the art, for example electroplating. In particular copper and copper salt can be provided on substrates by means of electroplating.

According to methods of the invention, in a second step a reaction solution is prepared by mixing a source of a second metal, an imidazolate and optionally a modulator in a solvent. The second metal is advantageously zinc, cobalt, iron, copper or a mixture of two or more thereof, more advantageously zinc, cobalt or a mixture of both. In a further step, ZIF crystals are formed, i.e. obtained, by contacting the substrate with the reaction solution.

Advantageously, the solvent is methanol, ethanol or N,N-dimethylformamide (DMF).

The source of the second metal can be any source allowing to form ions of the second metal in the reaction solution. The second metal is advantageously zinc, cobalt, copper and/or iron. Particularly, the source is a salt of the second metal. Advantageously, the salt is one or more of a nitrate salt, a chloride salt, and a sulphate salt.

Advantageously, the imidazolate is 2-methylimidazole.

It is known that in MOF synthesis, especially the synthesis of ZIF crystals, the crystal formation is a result of coordination between the ions of the second metal and the imidazolate acting as a linker molecule. Further, the addition of a modulator to the reaction solution allows to control the size and the shape of the ZIF crystals.

When the reaction solution comprises a modulator, the concentration of the modulator is advantageously expressed with regards to the amount of the second metal. Advantageously, the molar ratio of the second metal and the modulator is between 1:0.1 and 1:8, preferably between 1:0.25 and 1:7, such as between 1:0.5 and 1:6, or between 1:0.75 and 1:5, more preferably between 1:1 and 1:4.

Advantageously, the molar ratio of the second metal and the imidazolate is between 1:1.1 and 1:16, preferably between 1:1.5 and 1:10, more preferably between 1:1.75 and 1:5. A particularly preferred molar ratio of the second metal and the imidazolate is 1:2.

Advantageously, the molar ratio of the second metal and the solvent is between 1:100 and 1:2000, such as between 1:125 and 1:1000, preferably between 1:150 and 1:500, more preferably between 1:175 and 1:300, such as between 1:185 and 1:250. A particularly preferred molar ratio of the second metal and the solvent is 1:200.

The size and shape of the ZIF crystals can be controlled by the concentration of modulator that is added to the reaction solution compared to the amount of the second metal in the reaction solution. Advantageously, the concentration of the modulator affects the nucleation and growth rates of the crystals. At low relative concentrations of the modulator to the second metal, a crystal initiation competition between the imidazolate linker and the modulator can be present. Consequently, nucleation is limited, leading to slow growth and larger crystals. The larger crystals typically have a mean crystal size in the micrometer range. The crystals obtained at low relative modulator concentrations can have a rhombic dodecahedral shape. Preferred low relative modulator concentrations are reaction solutions in which the molar ratio of the second metal and the modulator is between 1:0.1 and 1:1.9, preferably between 1:0.25 and 1:1.75, preferably between 1:0.4 and 1:1.6, or between 1:0.5 and 1:1.5.

At higher relative concentrations of the modulator to the second metal, the modulator can deprotonate the imidazolate linker, i.e. the modulator acts as a deprotonation agent. Consequently, the crystals grow faster (increased nucleation), but may remain smaller. The smaller crystals typically have a mean crystal size in the nanometer range. The crystals obtained at higher relative modulator concentrations can have a cubic shape. With higher modulator concentrations is meant in the light of the present invention a molar ratio of the second metal and the modulator between 1:1.9 and 1:8.

The inventors have further discovered that the relative concentration of the modulator to the second metal also allows to control the thickness of the ZIF crystal coating layer, when the ZIF-crystals are present as a layer (a coating). Hence, the methods of the invention allow to control both ZIF crystal size and shape, and the coating thickness.

Advantageously, when the reaction solution comprises a modulator, the modulator is, or comprises, an acetate. Preferred examples of acetate modulators are acetate salts, such as sodium acetate and potassium acetate. Alternatively or in addition, the modulator can be, or comprise, trimethylamine (TEA).

The reaction solution can be prepared according to various routes and any one of them may be used in methods of the present disclosure. In some examples, the source of the second metal, the imidazolate and the optional modulator are mixed together in the solvent, thereby obtaining the reaction solution.

Alternatively, two or more separate solutions are prepared, each comprising at least one different ingredient of the reaction solution. These separate solutions are then mixed to obtain the reaction solution. By so doing, an improved control on the reaction starting time can be obtained. By way of example, a first solution and a second solution are prepared. The first solution can be prepared by mixing at least one of the second metal source and the optional modulator in (part of) the solvent, preferably without adding the imidazolate. The second solution can be prepared by mixing the imidazolate and/or, when used, the modulator in (part of) the solvent, preferably without adding the second metal source. The first solution and the second solution are then mixed to obtain the reaction solution. When a modulator is used, it may be added only to the first solution, only to the second solution, or to both of the first and second solutions. The inventors have discovered that by doing so, an improved control of the reaction process, such as the start of the crystal formation, and an improved control of the thickness of the ZIF coating and/or size and shape of the ZIF crystals is obtained.

In the light of the present invention, with "contacting the substrate with the reaction solution" is meant that the substrate and the reaction solution make contact, i.e. the substrate is wetted with the reaction solution. This can be realised by, without being limited thereto, submersion of the substrate in the reaction solution, or applying the reaction solution to the substrate. Preferably, the substrate is submersed in the reaction solution.

Advantageously, the contacting step is performed at a temperature between 5 °C and 50 °C, for example between 8 °C and 40 °C, such as between 10 °C and 30 °C, for example between 13 °C and 27 °C, e.g. at any temperature between 15 °C and 25 °C. Advantageously, the contacting step is performed at room temperature.

Advantageously, the reaction solution exchanges with a surrounding atmosphere during the contacting step. In other words, the reaction solution advantageously shares an interface with the (surrounding) atmosphere. The interface advantageously allows for exchange of chemical compounds between the reaction solution and the surrounding atmosphere. For example, oxygen can diffuse into the reaction solution. Alternatively, or in addition, gases formed in the reaction solution during the contacting step can be removed from the reaction solution, i.e. gas bubbles formed in the reaction solution can be released to the environment. Advantageously, the surrounding atmosphere is an open atmosphere, allowing any gases released from the reaction solution through the interface to be continuously removed and/or allowing compounds, such as oxygen, diffusing into the reaction solution from the atmosphere to be continuously supplied. Advantageously, the exchange takes place under a continuous flow of gas in the atmosphere. Such a refreshment of the atmosphere allows to keep the concentration of any gases released from the reaction solution in the atmosphere sufficiently low to allow continuous release of such gases from the reaction solution.

Advantageously, the surrounding atmosphere comprises at least 10 vol.% oxygen, preferably at least 15 vol. % oxygen, more preferably at least 20 vol.% oxygen, for example at least 23.5 vol.% oxygen. Advantageously, the surrounding atmosphere is air.

Advantageously, the contacting step is performed at a pressure equal to or higher than atmospheric pressure, preferably at substantially atmospheric pressure. Alternatively, the contacting step can be performed at a pressure below atmospheric pressure.

Advantageously, the ZIF crystals obtained by the methods of the invention comprise ZIF-8 crystals, ZIF-67 crystals or a combination of both. ZIF-8 crystals are typically obtained by methods of the present invention when utilizing Zn as the second metal, for example when using a zinc salt as described above. ZIF-67 crystals are typically obtained when utilizing Co as the second metal, for example when using a cobalt salt as described above. A combination or mixture of Zn and Co can be utilized as ingredient to the reaction solution, potentially resulting in formation of both ZIF-8 and ZIF-67 crystals.

The creation of ZIF crystals on the substrate can be steered by the presence of the first metal on an exposed surface of the substrate. Advantageously, first patches or portions of the substrate surface can be provided which comprise the first metal, and adjacent second portions or patches on the substrate surface may be free of the first metal. This can result in ZIF crystals being formed only or mainly on the first patches. The second patches can be substantially free from covering by the ZIF crystals. This allows to obtain a patterned structure of ZIF crystals.

Optionally, the substrate can be pre-treated prior to contacting it with the reaction solution. The pretreatment can comprise washing the substrate with water, optionally including soap, followed by drying, such as air drying, optionally by means of compressed air. The pre-treatment can comprise etching the substrate, for example with sandpaper, such as sandpaper P100, P120, P150, P180 or finer sandpaper. When the pre-treatment comprises etching, the etching is preferably followed by washing with deionized water and/or cleaning with compressed air to remove any residuals from the sanding from the substrate.

According to a second aspect of the invention, there is provided an article comprising a substrate and zeolitic imidazolate framework (ZIF) crystals. Advantageously, the ZIF crystals are obtained by methods of the present invention.

Advantageously, the ZIF crystals are present as a coating on the substrate comprising a first metal. Advantageously, the substrate is as described above. Advantageously, the coating of ZIF crystals has a thickness between 5 $\mu$m and 500 $\mu$m, for example between 10 $\mu$m and 400 $\mu$m, between 20 $\mu$m and 300 $\mu$m, between 30 $\mu$m and 250 $\mu$m, preferably between 40 $\mu$m and 200 $\mu$m.

Advantageously, the ZIF crystals have a cubic or a rhombic dodecahedral shape. Advantageously, the ZIF crystals have a mean crystal size between 1 $\mu$m and 50 $\mu$m, preferably between 2 $\mu$m and 40 $\mu$m, more preferably between 3 $\mu$m and 30 $\mu$m, as measured by means of scanning electron microscope (SEM).

Advantageously, the ZIF crystals comprise ZIF-8 crystals, ZIF-67 crystals or a combination of both, preferably ZIF-8 crystals, as explained above.

At least some, if not most or all, of the ZIF crystals in the coating can be doped with the first metal. Advantageously, the doped ZIF crystals are present in a first portion or layer of the coating adjacent to, in particular in contact with, the substrate. Advantageously, a second portion or layer of the coating adjacent to the exposed surface of the coating substantially comprises or consists of non-doped (pure) ZIF-crystals and advantageously is substantially free of atoms of the first metal.

The present invention is further related to the use of the ZIF crystals of the invention or obtained by the methods of the invention. The invention is further related to the use of articles according to the second aspect of the invention. Uses include separation, desorption, adsorption or catalytic applications. An article comprising ZIF crystals on a solid support can be used in sensors, microreactors, optoelectronics, and as structured adsorbents. Such applications are typically not available for ZIF crystal powders.

Substrates coated with ZIF crystals, such as through methods as described herein, can be used to manufacture devices, for example reactors, particularly continuous flow devices or reactors. Such devices can comprise a chamber in which the substrates coated with ZIF crystals are arranged. The substrates are arranged such that the ZIF crystal layers are exposed to a flow of compounds or reactants in the device. By way of example, the substrates can be formed of any suitable structure, such as corrugated or perforated sheets, arranged in a chamber, preferably in an immobilized manner. These sheets can be stacked in a suitable manner to obtain flow channels through the chamber.

It was shown that ZIF coatings on a first metal substrate obtained through methods of the present invention allow for effectively removing PFOS (perfluorooctanesulfonic acid) compounds from aqueous solutions, particularly at low initial PFOS concentrations (100 ppm or lower, particularly 10 ppm or lower, such as 1000 ppb or lower, 500 ppb or lower or even 200 ppb or lower). In particular, a 96 % removal efficiency after only 4 hours for a PFOS-containing solution of 100 ppb as initial concentration was obtained with a ZIF-8 coated Cu sheet. Without wishing to be bound by any theory, the inventors believe that this is made possible by the specific structuring of the ZIF crystals that can be obtained by methods of the present invention. The structuring of the crystals enable a high mass transfer (as compared to commercially known products). In other words, the mass transfer limitation is minimized because of the structuring of the ZIF crystals in a coating layer.

Another possible application is the separation of chemicals in vapour phase separation processes. Examples of such separation processes are methanol/water separation, ethanol/methanol separation, ABE (acetone, n-butanol, ethanol) separation and removal of volatile organic compounds (VOC). A further possible application concerns gas separation processes, such as ethylene/ethane separation and propylene/propene separation. Other applications include the use in sensor applications, biomedical applications and in adsorption-driven heat pumps.

Examples

Example 1

As substrate, the following metal salts were acquired from Sigma-Aldrich: aluminium nitrate nonahydrate $(Al(NO_3)_3.9H_2O)$, cobalt nitrate hexahydrate $(Co(NO_3)_2.6H_2O)$, copper nitrate hexahydrate $(Cu(NO_3)_2.3H_2O)$, and zinc nitrate hexahydrate $(Zn(NO_3)_2.6H_2O)$ - all with >99% purity. 2-methylimidazole $(C_4H_6N_2)$, sodium acetate $(CH_3COONa)$ and meth-

anol ($CH_3OH$) were acquired from Sigma-Aldrich - all with >99% purity.

The reaction solution was prepared at room temperature. Two solutions were prepared. In a first solution 0.3 g of zinc nitrate hexahydrate ($Zn(NO_3).6H_2O$) as zinc salt was dissolved in 2.5 ml methanol. In a second solution, 0.165 g of 2-methylimidazole (Hmim) and 0.082 g of sodium acetate (Ac) as modulator were dissolved in 5.7 ml methanol (MeOH). The two solutions were then mixed in a glass vial reaching the molar composition $Zn^{2+}$:Hmim:Ac:MeOH = 1:2:1:200. In order to ensure no crystal growth, the final solution was left ageing for 24 hours. The reaction solution was clear and stable. No change or material formation was noticed up to 72 hours.

Into this mixture after the ageing period, corresponding metal salt packed in a pipette previously was introduced. The reaction solution was kept open to the surrounding air (atmospheric pressure). For each of the metal salts, in the first moments after placing the pipettes in the reaction solution, gas bubbles were formed inside the pipette, followed by dissolution of the salt.

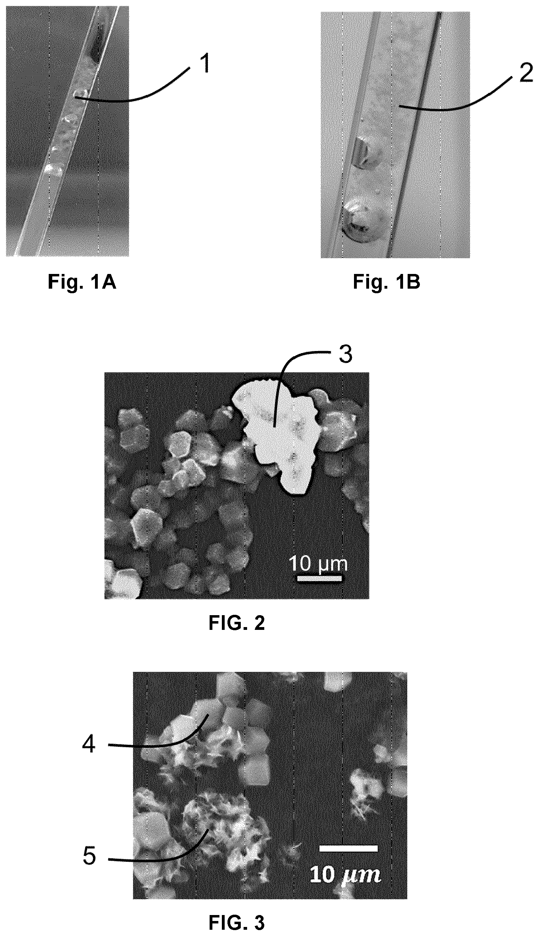

For iron salt and copper salt, a rapid precipitation was seen within 3 minutes. Figure 1A shows a photograph of copper nitrate hexahydrate containing pipette after 5 minutes in the reaction solution. It is clear that a reaction product 1 has already been formed. For zinc nitrate hexahydrate, a precipitation was noticed within 6 minutes, whereas for aluminium and cobalt it was noticed after 20 minutes and 40 minutes, respectively. Figure 1B shows a photograph of zinc nitrate hexahydrate containing pipette after almost 60 minutes in the reaction solution, clearly showing the formation of a reaction product 2.

After 60 minutes, the pipette was taken out of the vial. The material formed inside the pipettes was collected via centrifugation, washed with methanol and acetone and dried at low pressure. The experiment was repeated several times in order to obtain enough material for analysis.

The material was examined by means of scanning electron microscope (SEM). A JSM-6000 plus JEOL device under vacuum (approximately operating at 133 * $10^{-6}$ Pa) was used.

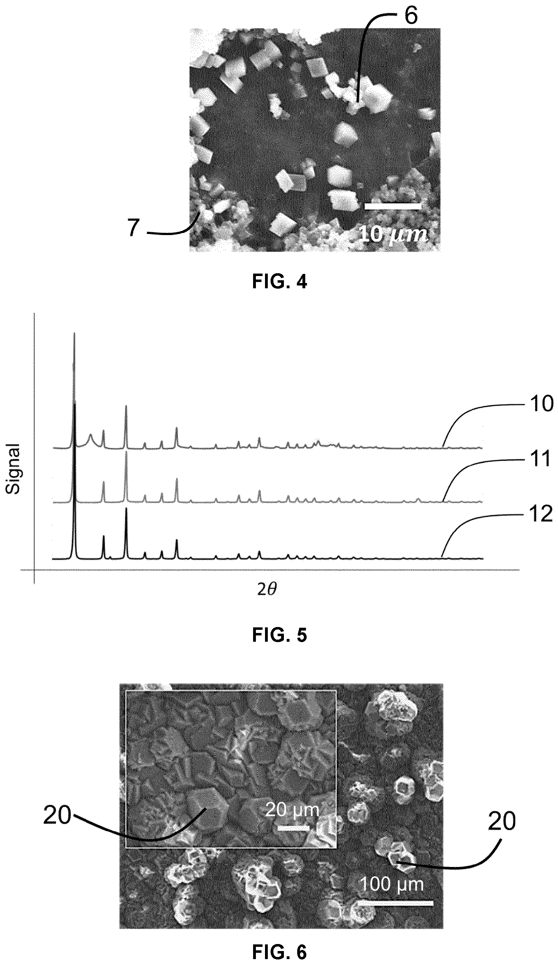

Figure 2 shows the SEM image of the material obtained from copper nitrate hexahydrate. The SEM-image shows the presence of small cubic crystals 3 with mean crystal sizes varying between 4 $\mu$m and 15 $\mu$m. Figures 3 and 4 show the SEM image of the material obtained from zinc nitrate hexahydrate and aluminium nitrate nonahydrate, respectively. The SEM-images show the presence of small cubic crystals 4, 6 along with some non-crystalline material 5, 7.

The material obtained from copper nitrate hexahydrate and zinc nitrate hexahydrate was further analysed via X-ray diffraction. As reference sample, a commercial product consisting of pure ZIF-8 crystals was analysed as well, and the obtained spectra were compared. Figure 5 shows the spectra obtained by XRD-characterisation for the material obtained from copper salt 10, the material obtained from zinc salt 11 and the commercial ZIF-8 crystals 12. The intensity of all peaks, except for commercial ZIF-8 crystals, was modified (augmented) for better comparison and identification. It is clear that for copper salt and zinc salt, the result indicated the presence of ZIF-8 crystals.

Example 2

Copper foil, zinc foil, aluminium foil (all >99% purity) and a stainless steel (316L) foil were provided as substrate. The copper foil had a thickness between 290 $\mu$m and 300 $\mu$m. The zinc foil had a thickness of 700 $\mu$m. The foils were pre-treated by washing with soap, followed by etching with P180 sandpaper, washing with deionised water and drying with compressed air. A reaction solution was prepared as described in Example 1. The metal foils were then placed vertically in the reaction solution at room temperature and atmospheric pressure. The reaction solution was kept open to the surrounding air (atmospheric pressure).

After 24 hours, the foils were removed from the reaction solution and were washed with methanol and acetone and dried in an oven at 90 °C (363 K) for 16 hours.

The obtained substrates were analysed by means of scanning electron microscope (SEM). A JSM-6000 plus JEOL device under vacuum (approximately operating at 133 * $10^{-6}$ Pa) was used.

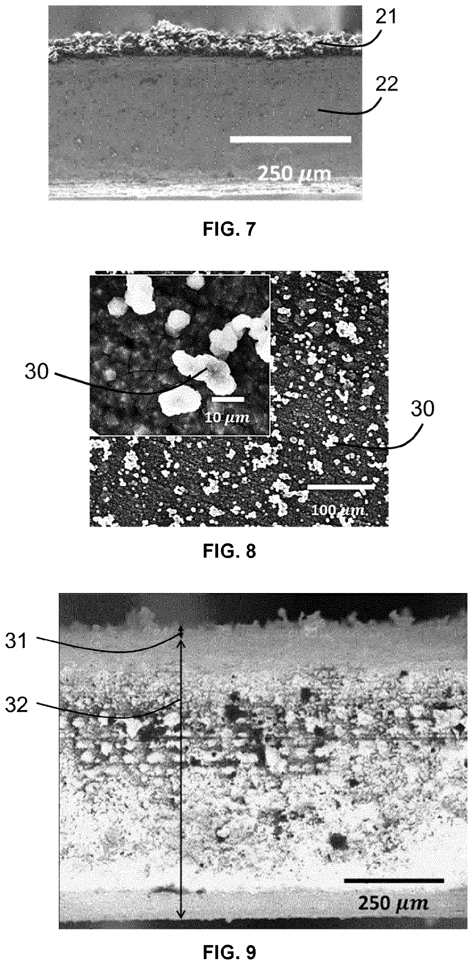

Figure 6 shows a top-view of the material deposited on the surface of the copper foil. Truncated rhombic dodecahedral shaped ZIF-8 crystals 20 having a mean crystal size of 30 $\mu$m were observed. Figure 7 shows a cross-sectional view, from which it is clear that a continuous layer ZIF-8 crystals 21 is obtained on the copper foil 22, i.e. a coating of ZIF-8 crystals 21 is present on the surface of the copper foil 22. The thickness of the coating varied between 35 $\mu$m and 60 $\mu$m.

Figure 8 shows a top-view of the material deposited on the surface of the zinc foil. ZIF-8 crystals 30 having a cubic shape and a mean crystal size of 3 $\mu$m were observed. Figure 9 shows a cross-sectional view, from which it is clear that a continuous layer ZIF-8 crystals 31 is obtained on the zinc foil 32, i.e. a coating of ZIF-8 crystals 31 is present on the surface of the zinc foil 32. The thickness of the coating was around 5 $\mu$m. No coating or crystal growth was noticed over stainless-steel surface. These findings indicate that the crystal growth is not due to precipitation from the liquid bulk phase and shows the importance of the presence of the foil surface.

The coating on the copper foil was further examined by removing it via powder X-ray diffraction (PXRD) and alcohol vapour-phase adsorption. The material removed from the copper foil was analysed by X-ray diffraction (XRD) and compared with the XRD-spectrum of a commercial ZIF-8 powder (Basolite Z1200, supplied by BASF). X-ray diffraction data were recorded with a Bruker D8 Advance Eco diffractometer using Cu K$\alpha$ radiation (40 kV, 25 mA) with LynxEye XE-T (PSD opening 3.3°) detector in the range of 5-70° 2theta, with 0.015° step size and time 0.5s/step.

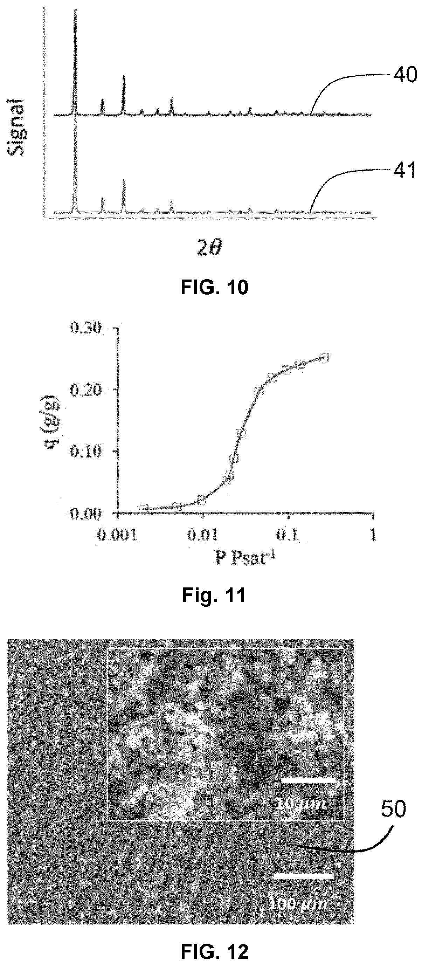

Figure 10 shows both spectra, from which it is clear that the spectrum of the material 40 removed from the copper foil and that of the commercial ZIF-8 crystal powder 41 are substantially the same. Hence, the coating deposited on the copper film is considered a coating of ZIF-8 crystals. Further, all peaks were sharp and well defined, indicating the fully crystalline nature of the coating material.

The adsorption isotherms of n-butanol in ZIF-8 were also measured, by means of the dynamic gravimetric method on SGA-100H microbalance system (VTI Corporation, USA). A reservoir filled with n-butanol is temperature controlled through Peltier elements. $N_2$ bubbling through the reservoir entrains the n-butanol vapour. This vapour stream continuously flows over the sample positioned in a sample holder connected to the microbalance. During the measurements, the total pressure is constant near atmospheric pressure and the adsorbate partial pressure is controlled by regulating the saturator temperature and/or the dilution rate. Low vapor pressures were obtained by diluting the saturator flow at the lowest saturator temperature with $N_2$ flow.

About 10 mg of ZIF-8 material removed from the copper foil was placed in a stainless-steel sample pan and positioned in the microbalance system. After activation by heating to 200 °C during 2 hours and at a heating rate of 2 °C/min under $N_2$ flow, adsorption isotherms of n-butanol were determined at 323 K by weighing the adsorbate uptake at different partial pressures of the adsorbate. The equilibrium criterion was typically set at a mass change <0.0050 wt.% over a period of 10 min. The recorded temperature and dilution rate were converted to the adsorbate vapor pressure using the Antoine equation (I)

$$\log P = A - \frac{B}{C+T} \qquad (I)$$

wherein p is the vapour pressure (in mmHg), T is temperature (in °C), and A, B and C are species-specific constants. For n-butanol the minimal temperature is 0 °C and the maximal temperature is 118 °C. Further, for n-butanol A is 7.92484, B is 1617.52 and C is 203.296.

Figure 11 shows the vapour-phase adsorption isotherm of n-butanol. The isotherm has an S-shaped profile, which is a characteristic of ZIF-8 attributed to changes in framework structure caused by the interaction of the n-butanol molecules. The isotherm is in good agreement with isotherms reported in literature, confirming the high quality of the ZIF-crystals obtained as a layer on the copper foil.

The ZIF-crystal coating on the copper foil was also tested for stability. The stability was tested by first heating the coated foil to 90 °C for 1 hour, followed by 30 minutes sonication at an ultrasonic frequency of 37 kHz in an Elmasonic S 50 R apparatus (Elma Schmidbauer GmbH) . This was repeated two more times, i.e. the coated copper foil was 3 times heated and sonicated. The sample was weighted before and after each cycle. No mass loss was noticed, which indicates an excellent stability of the ZIF-crystal coating on the copper foil upon repeated heating and cooling down, as well as upon sonication.

Example 3

The impact of the modulator was examined by coating a copper foil (>99% purity) with reaction solutions comprising different amounts of sodium acetate as modulator.

The copper foil was pre-treated as explained in Example 2.

Two reaction solutions were prepared by adding to methanol as solvent zinc nitrate hexahydrate $(Zn(NO_3).6H_2O)$ as zinc salt, 2-methylimidazole and different amounts of sodium acetate as modulator. One reaction mixture without any modulator was prepared as well. The three reaction mixtures had the molar compositions Zn:Hmim:Ac:MeOH of 1:2:0:200 (no modulator), 1:2:2:200 and 1:2:4:200, respectively, wherein Hmim stands for 2-methylimidazole, Ac stands for sodium acetate and MeOH stands for methanol.

A copper foil was placed vertically in each reaction solution at room temperature. The reaction solution was kept open to the surrounding air (atmospheric pressure).

After 24 hours, the copper sheets were removed from the reaction solution and were washed with methanol and acetone and dried in an oven at 90 °C (363 K) for 16 hours.

The obtained substrates were analysed by means of scanning electron microscope (SEM). A JSM-6000 plus JEOL device under vacuum (approximately operating at $133 * 10^{-6}$ Pa) was used.

Figures 12, 13 and 14 show the SEM images of the reaction solutions having a molar compositions Zn:Hmim:Ac of 1:2:0, 1:2:2 and 1:2:4, respectively (i.e. increasing concentration of modulator). Figure 6 shows the SEM image of the reaction solution having a molar composition Zn:Hmim:Ac of 1:2:1, as explained in Example 2. In the absence of any modulator, cubic shaped crystals 50 having a nanometer ranged mean crystal size are present on the surface of the copper foil, whereas with sodium acetate present as modulator, the crystals have a mean crystal size in the micrometer range. It was further observed that the presence of a modulator allowed to obtain more uniform coatings on the copper foil.

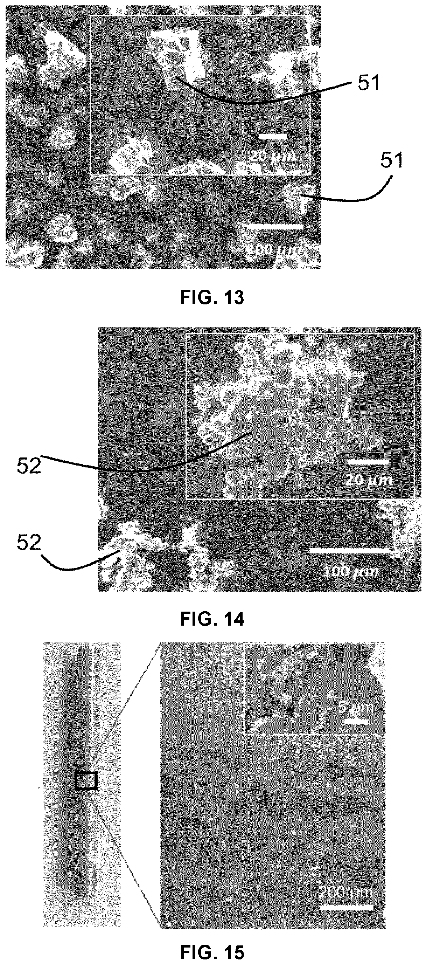

When a modulator is present, an increase of its concentration leads to a faster nucleation rate, and to the growth of smaller crystals. For the molar concentration Zn:Hmim:Ac 1:2:1 (Figure 6), the crystals 20 are truncated rhombic dodecahedral of shape and have a mean crystal size of 30 $\mu$m. However, for molar concentrations Zn:Hmim:Ac of 1:2:2 and higher modulator concentrations, the ZIF-8 crystals are cubic shaped. Figure 13 (molar concentration Zn:Hmim:Ac 1:2:2) shows a continuous and non-uniform coating of cubic ZIF-8 crystals 51 having a mean crystal size of 20 μm, whereas for a molar concentration Zn:Hmim:Ac of 1:2:4 (Figure 14) the ZIF-8 crystals 52 have a mean crystal size of 5 μm to 7 μm.

Example 4

A stainless steel rod of 5 cm length and 0.5 cm diameter was selectively electroplated with copper to obtain a patterned surface. Prior to electroplating, the rod was washed with water and soap. The electroplating was performed by placing the steel rod as anode and a copper sheet as cathode in an acidic solution which was continuously stirred. The acidic solution was obtained by mixing 281.5 ml of 32% HCl in deionised water to obtain a 15% HCl solution. The electroplating was carried out by applying 3 V of power for 5 minutes.

The partially electroplated rod was then placed in a reaction solution at room temperature with molar composition Zn:Ac:Hmim:MeOH of 1:4:2:200, wherein Zn stands for zinc salt, Hmim stands for 2-methylimidazole, Ac stands for sodium acetate and MeOH stands for methanol.

After 24 hours, the rod was removed from the reaction solution and was washed with methanol and acetone and dried at 90 °C (363 K). From Figure 15 it is clear that a coating of ZIF-8 crystals was predominantly formed over the electroplated copper zones, which were uniformly covered. No copper was left visible. The SEM image shows that cubic ZIF-8 crystals of approx. 1 μm were obtained.

**Claims**

1. Method for producing zeolitic imidazolate framework (ZIF) crystals, the method comprising the steps of:

   - providing a substrate comprising a first metal provided on an exposed surface of the substrate,
   - mixing a source of a second metal, an imidazolate and optionally a modulator in a solvent, thereby obtaining a reaction solution, wherein the second metal is zinc, cobalt, iron, copper or a mixture of two or more thereof, and
   - contacting the exposed surface with the reaction solution, thereby obtaining ZIF crystals,

   **characterised in that** the contacting step is performed at a temperature between 5 °C and 50 °C.

2. Method according to claim 1, wherein the source of the second metal comprises a salt of the second metal, and optionally wherein the ZIF crystals comprise one or a combination of ZIF-8 crystals and ZIF-67 crystals.

3. Method according to claim 2, wherein the second metal comprises zinc and wherein the ZIF crystals comprise ZIF-8 crystals, preferably the source of the second metal is a zinc salt, preferably zinc nitrate, zinc chloride, and/or zinc sulphate.

4. Method according to any one of the preceding claims, wherein the ZIF crystals form a coating on the exposed surface of the substrate.

5. Method according to any one of the preceding claims, wherein the reaction solution exchanges with an open atmosphere or an atmosphere under a continuous flow of gas in the atmosphere during the contacting step.

6. Method according to claim 5, wherein the atmosphere comprises at least 20 vol.% oxygen, and is preferably air.

7. Method according to any one of the preceding claims, wherein the contacting step is performed at room temperature.

8. Method according to any one of the preceding claims, wherein the contacting step is performed at substantially atmospheric pressure.

9. Method according to any one of the preceding claims, wherein the solvent is methanol, ethanol or N,N-dimethylformamide.

10. Method according to any one of the preceding claims, wherein the reaction solution comprises the modulator and wherein the modulator comprises an acetate salt, preferably the acetate salt is sodium acetate or potassium acetate.

11. Method according to any one of the preceding claims, wherein the reaction solution comprises the modulator and wherein a molar ratio of the second metal and the modulator is between 1:0.1 and 1:8.

12. Method according to any one of the preceding claims, wherein the imidazolate is 2-methylimidazole.

13. Method according to any one of the preceding claims, wherein the first metal is a transition or a post transition metal, preferably the first metal is one or a combination of: copper, zinc, aluminium, cobalt, iron, and nickel.

14. Article, comprising a substrate and zeolitic imidazolate framework (ZIF) crystals obtained by the method of any one of claims 1 to 13, wherein the substrate comprises a first metal exposed on a surface of the substrate, wherein the ZIF crystals are present as a coating on the surface, wherein the ZIF crystals have a cubic or a rhombic dodecahedral shape, **characterised in that** the coating of ZIF crystals has a thickness between 5 $\mu$m and 500 $\mu$m, preferably wherein the ZIF crystals have a mean crystal size between 1 $\mu$m and 50 $\mu$m, preferably between 3 $\mu$m and 40 $\mu$m, as measured by means of scanning electron microscope (SEM).

15. Use of the article according to claim 14, for separation, desorption, adsorption, or catalytic applications.

Fig. 1A

Fig. 1B

FIG. 2

FIG. 3

**FIG. 4**

**FIG. 5**

**FIG. 6**

FIG. 7

FIG. 8

FIG. 9

FIG. 10

Fig. 11

FIG. 12

FIG. 13

FIG. 14

FIG. 15

Europäisches
Patentamt

European
Patent Office

Office européen
des brevets

## EUROPEAN SEARCH REPORT

Application Number

EP 22 17 6237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAPPORELLO R. L. ET AL: "Secondary growth of ZIF-8 films onto copper-based foils. Insight into surface interactions", MICROPOROUS AND MESOPOROUS MATERIALS, vol. 211, 1 July 2015 (2015-07-01), pages 64-72, XP055839495, Amsterdam ,NL ISSN: 1387-1811, DOI: 10.1016/j.micromeso.2015.02.049 | 1-4, 12-15 | INV. C01B37/00 C01B39/00 B01D53/02 B01J20/22 |
| Y | * page 64, Abstract * | 9-11 | |
| A | * page 65, "2. Experimental" * * pages 66-68, "3.2. Synthesis employing water or methanol as solvents" * * page 69, Figure 4 * * page 71, "4. Conclusions" * | 5-8 | |
| X | LEE JEONG HEE ET AL: "Zeolitic imidazolate framework ZIF-8 films by ZnO to ZIF-8 conversion and their usage as seed layers for propylene-selective ZIF-8 membranes", JOURNAL OF INDUSTRIAL AND ENGINEERING CHEMISTRY, vol. 72, 28 December 2018 (2018-12-28), pages 374-379, XP085597232, ISSN: 1226-086X, DOI: 10.1016/J.JIEC.2018.12.039 | 1-8,12 | |
| Y | * page 375, right-hand column, "Secondary growth of ZIF-8 membranes" * | 9-11 | |
| A | | 13,15 | |

TECHNICAL FIELDS SEARCHED (IPC)

C01B
B01D
B01J
G01N

-/--

The present search report has been drawn up for all claims

| Place of search | Date of completion of the search | Examiner |
|---|---|---|
| The Hague | 16 November 2022 | Rigondaud, Bernard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................................
& : member of the same patent family, corresponding
document

EPO FORM 1503 03.82 (P04C01)

**EP 4 286 334 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL C. MCCARTHY ET AL: "Synthesis of Zeolitic Imidazolate Framework Films and Membranes with Controlled Microstructures", LANGMUIR, vol. 26, no. 18, 21 September 2010 (2010-09-21), pages 14636-14641, XP055196612, ISSN: 0743-7463, DOI: 10.1021/la102409e | 14,15 | |
| A | * page 14637, left-hand column, 2d full paragraph * <br> * page 14637, "2. Experimental Section" * <br> * page 14638, right-hand column, 2d paragraph * <br> * page 14639, Figures 3 (a) & (b) * | 1-13 | |
| A | KIM DAEOK ET AL: "Highly Hydrophobic ZIF-8/Carbon Nitride Foam with Hierarchical Porosity for Oil Capture and Chemical Fixation of CO 2", ADVANCED FUNCTIONAL MATERIALS, vol. 27, no. 23, 1 June 2017 (2017-06-01), page 1700706, XP55980405, DE ISSN: 1616-301X, DOI: 10.1002/adfm.201700706 Retrieved from the Internet: URL:https://api.wiley.com/onlinelibrary/td m/v1/articles/10.1002%2Fadfm.201700706> * page 3, right-hand column, * | 1-15 | |

-----

-----

-/--

TECHNICAL FIELDS SEARCHED (IPC)

The present search report has been drawn up for all claims

| Place of search | Date of completion of the search | Examiner |
|---|---|---|
| The Hague | 16 November 2022 | Rigondaud, Bernard |

Europäisches
Patentamt
European
Patent Office
Office européen
des brevets

# EUROPEAN SEARCH REPORT

Application Number

EP 22 17 6237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CRAVILLON JANOSCH ET AL: "Rapid Room-Temperature Synthesis and Characterization of Nanocrystals of a Prototypical Zeolitic Imidazolate Framework", CHEMISTRY OF MATERIALS, vol. 21, no. 8, 28 April 2009 (2009-04-28), pages 1410-1412, XP55980424, US ISSN: 0897-4756, DOI: 10.1021/cm900166h ----- | 1,6-8 | |

TECHNICAL FIELDS
SEARCHED        (IPC)

The present search report has been drawn up for all claims

| Place of search | Date of completion of the search | Examiner |
|---|---|---|
| The Hague | 16 November 2022 | Rigondaud, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016040616 A

**Non-patent literature cited in the description**

- **PAPURELLO, R.L. ; FERNÁNDEZ, J.L. et al.** Micro-reactor with silver-loaded metal-organic framework films for gas-phase reactions. *Chemical Engineering Journal,* 2017, vol. 313, 1468-1476

- **PAPURELLO, R.L. ; ZAMARO J.M.** Facile in situ growth of ZIF-8 films onto aluminium for applications requiring fast thermal response. *Journal of Material Science,* 2021, vol. 56, 9065-9078